(19) Europäisches Patentamt
European Patent Office
Office européen des brevets

(11) **EP 2 718 602 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(21) Anmeldenummer: **12709537.0**

(22) Anmeldetag: **14.03.2012**

(51) Int Cl.:
**F16K 31/06** (2006.01)   **F16K 17/22** (2006.01)

(86) Internationale Anmeldenummer:
**PCT/EP2012/001139**

(87) Internationale Veröffentlichungsnummer:
**WO 2012/167852 (13.12.2012 Gazette 2012/50)**

(54) **VENTIL, INSBESONDERE DRUCKREGELVENTIL ODER DRUCKBEGRENZUNGSVENTIL**

VALVE, IN PARTICULAR A PRESSURE REGULATING VALVE OR PRESSURE LIMITING VALVE

SOUPAPE, EN PARTICULIER SOUPAPE DE RÉGULATION DE PRESSION OU SOUPAPE DE LIMITATION DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2011 DE 102011110257**

(43) Veröffentlichungstag der Anmeldung:
**16.04.2014 Patentblatt 2014/16**

(73) Patentinhaber: **Hydac Fluidtechnik GmbH**
**66280 Sulzbach/Saar (DE)**

(72) Erfinder:
• **BRUCK, Peter**
**66484 Althornbach (DE)**
• **SCHULZ, Frank**
**66440 Blieskastel-Bierbach (DE)**

(74) Vertreter: **Bartels und Partner, Patentanwälte**
**Lange Strasse 51**
**70174 Stuttgart (DE)**

(56) Entgegenhaltungen:
**DE-A1- 4 442 085     DE-A1-102005 006 321**

**Beschreibung**

Die Erfindung betrifft ein Ventil, insbesondere ein Druckregelventil zum Ansteuern eines Mediendruckes eines, das Ventil durchströmenden Mediums, mit einer Hauptsteuerstufe und einer die Hauptsteuerstufe ansteuernden Vorsteuerstufe, die mittels einer bestrombaren Betätigungseinrichtung entgegen der Wirkung einer Rückstelleinrichtung angesteuert ist und die eine Druckentlastungsstufe des Ventils aufweist.

Ventile, insbesondere für ölhydraulische Anlagen, wie Druckregelventile zum Ansteuern eines Mediendruckes eines, das Ventil durchströmenden Mediums, sind hinreichend bekannt. Die US 4 316 599 beispielsweise beschreibt ein Proportional-Druckregelventil, das bei veränderlichem Eingangsdruck im Wesentlichen einen konstanten Ausgangsdruck liefert. Dabei wird der zu steuernde Ausgangsdruck des Druckregelventils durch ein Stromsignal vorgegeben, das von einer entsprechenden Ansteuerelektronik für einen Betätigungsmagneten eines Magnetsystems stammt. Vorzugsweise sind dahingehende Proportional-Druckregelventile als direkt gesteuerte Kolbenschieberventile in einer 3-Wege-Ausführung aufgebaut. Dahingehende Ventile dienen beispielsweise in ölhydraulischen Anlagen zur Steuerung von Kupplungen in Schaltgetrieben oder Automatikgetrieben, zur gezielten Beeinflussung von Druckaufbau und Druckabbau an hydraulischen Verbrauchern, zur Druckferneinstellung oder auch zur Vorsteuerung von Hydroventilen und vielgestaltig gebildeten hydraulischen Aktuatoren.

Die DE 10 2005 006 321 A1 zeigt ein Ventil, insbesondere ein Proportional-Druckbegrenzungsventil, mit einem Ventilgehäuse mit mindestens zwei Fluidanschlüssen, wobei das Ventil an ein hydraulisches Antriebssystem mit einem vorgebbaren Verbraucherdruck anschließbar ist. Das Ventil eignet sich auch zur Verwendung in hydraulischen Anlagen mit dünnflüssigen Fluidmedien dadurch, dass mittels einer Steuereinrichtung ein Ventilkolben ansteuerbar ist, der mittels eines Energiespeichers in Wirkverbindung mit einem Vorsteuersitz steht, und dass der anstehende Verbraucherdruck an einem Fluidanschluss zumindest derart auf den Ventilkolben einwirkt, dass abhängig vom anstehenden Verbraucherdruck und von der Betätigungskraft der dahingehenden Steuereinrichtung eine Fluiddurchströmung zwischen den beiden anderen Fluidanschlüssen in beiden Richtungen innerhalb des Ventilgehäuses möglich ist. Eine Hauptsteuerstufe des Ventils ist von einer Vorsteuerstufe mittels einer bestrombaren Betätigungseinrichtung entgegen der Wirkung einer Rückstelleinrichtung angesteuert. Das Ventil weist in seiner Vorsteuerstufe ferner eine Druckentlastungsstufe auf.

Die DE 10 2007 015 077 A1 zeigt ein Schieberventil für Hydrauliksysteme, wie Proportional-Druckbegrenzungsventile oder Druckwaagen, mit einem vorzugsweise in Form einer Einschraubpatrone ausgebildeten Ventilgehäuse, in dem ein Ventilschieber axial bewegbar ist und das eine Zuströmöffnung aufweist, über die Fluid in das Ventilgehäuse einströmt, und mit zumindest einer in der Wand des Ventilgehäuses ausgebildeten Abströmöffnung, die in Abhängigkeit von der Axialstellung des Ventilschiebers durch diesen verschließbar oder für das Abströmen von Fluid aus dem Ventilgehäuse freigebbar ist. Um bei dem Schieberventil Kavitationserscheinungen zu verringern, ist vorgesehen, dass eine in die Innenwand des Ventilgehäuses eingearbeitete Ringnut vorhanden ist, die, bezüglich ihrer Axialposition, auf Höhe der zumindest einen Abströmöffnung derart positioniert ist, dass eine Steuerkante des Ventilschiebers bei dessen Bewegung aus der die Abströmöffnung verschließenden Stellung in die freigebende Stellung die Ringnut überläuft.

In einigen Anwendungen der Hydraulik oder Pneumatik wird von dahingehenden Ventilen ein Fail-Safe-Verhalten gewünscht, was bedeutet, dass bei einem Ausfall einer Ansteuerung des Ventils, insbesondere bei Ausfall einer bestrombaren Betätigungseinrichtung für das Ventil, das Ventil eine vorgebbare Funktion, insbesondere ein Ventilelement des Ventils eine vorgebbare Schaltstellung einnimmt. Dadurch lassen sich in einer hydraulischen Anlage gewünschte Funktionen oder Betriebspunkte der hydraulischen Anlage wählen. Als Beispiel seien hier hydraulische oder pneumatische Schaltelemente in Kühlsystemen genannt, bei deren Ausfall ihrer Ansteuerung das dahingehende Kühlsystem dennoch seine Funktion aufrecht zu erhalten hat.

Die DE 44 42 085 A1, die EP 0 030 083 A2, die US 4 750 704 und die DE 30 42 015 A1 zeigen jeweils vorgesteuerte Proportionaldruckregelventile mit einer Druckentlastungsstufe auf.

Ausgehend von diesem Stand der Technik, liegt der Erfindung die Aufgabe zugrunde, ein Ventil, insbesondere ein Druckregelventil oder Druckbegrenzungsventil zum Ansteuern eines Mediendruckes eines, das Ventil durchströmenden Mediums anzugeben, das ein vorgebbares Fail-Safe-Verhalten aufweist.

Erfindungsgemäß ist diese Aufgabe durch ein Ventil gelöst, das die Merkmale des Patentanspruchs 1 in seiner Gesamtheit aufweist.

Dadurch, dass die Druckentlastungsstufe der Vorsteuerstufe des Ventils eine Flächenübersetzungseinrichtung aufweist, ist es ermöglicht, dass allein durch Mediendruck an dem Ventil und vorzugsweise durch einen Mediendruck der Vorsteuerstufe und einer Übersetzung des Mediendruckes durch die Flächenübersetzungseinrichtung das erfindungsgemäße Ventil eine Fail-Safe-Funktion ermöglicht, und ein Ventilelement des Ventils, insbesondere eine, durch die Flächenübersetzungseinrichtung in Wirkverbindung mit der Vorsteuerstufe bewirkte Fail-Safe-Schaltposition einnimmt. Durch die erfindungsgemäße Ausgestaltung der Vorsteuerstufe zusammen mit der als Flächenübersetzungseinrichtung gebildeten Druckentlastungsstufe ist somit ein vorgebbares Fail-Safe-Verhalten des Ventils bei Ausfall der bestrombaren Betätigungseinrichtung des Ventils gegeben.

Die Flächenübersetzungseinrichtung weist eine erste, größere druckwirksame Fläche und eine demgegenüber zweite, kleinere druckwirksame Fläche auf. Auf beide, eine Flächendifferenz bildende, druckwirksame Flächen wirkt ein von der Vorsteuerstufe beeinflusster Mediendruck, so dass aufgrund der vorgebbaren Flächendifferenz innerhalb der Flächenübersetzungseinrichtung allein durch die Wirkung des Mediendruckes die Hauptsteuerstufe des Ventils von der Vorsteuerstufe des Ventils zur Erzielung eines Fail-Safe-Verhaltens angesteuert wird. Die Flächenübersetzungseinrichtung kann auch mit Hilfe zumindest einer Blende in der Vorsteuerstufeausgebildet werden. Damit ist auf einfache Weise und vollkommen in das erfindungsgemäße Ventil integriert, eine Fail-Safe-Funktion verwirklicht.

Vorteilhaft wird durch die Wirkung der Flächenübersetzungseinrichtung bei nicht betätigter Betätigungseinrichtung ein Ventilelement der Hauptsteuerstufe in eine von zumindest der Flächendifferenz der druckwirksamen Flächen und einem Mediendruck an einem Druckquellenanschluss des Ventils bestimmten, vorgebbaren Position bewegt und gehalten. Das Ventilelement der Hauptsteuerstufe kann auch durch die Wirkung der Blende und einem Mediendruck an dem Druckquellenanschluss des Ventils in die vorgebbare Position bewegt und gehalten werden. Der Mediendruck an dem Druckquellenanschluss des Ventils wird von der Kraft der Betätigungseinrichtung $F_N$, der Kraft der Rückstelleinrichtung $F_R$ und von der Flächendifferenz $F_1 - F_2$ der druckwirksamen Flächen gemäß der Formel:

$$p = \frac{(F_R - F_N)}{F_1 - F_2}$$

bestimmt. Mit der Magnetkraft ändert sich der Druck am Anschluss unabhängig vom Volumenstrom wird der Druck begrenzt.

Das Ventil öffnet beim Erreichen des Druckstufendruckes.

Besonders vorteilhaft bei dem erfindungsgemäßen Ventil ist, dass entgegen dem Stand der Technik, aus dem eine "fallende Kennlinie" des Magnetstroms aufgetragen über dem Mediendruck an einem Druckquellenanschluss eines Ventils lediglich bei sog. "ziehenden Magneten" bekannt ist, durch das erfindungsgemäße Ventil es ermöglicht ist, dass ein "drückender Magnet" eine dahingehende, "fallende Kennlinie" gleichfalls erzeugt. Bei dem erfindungsgemäßen Ventil übt die Betätigungseinrichtung zur Betätigung der Vorsteuerstufe somit eine Druckkraft auf einen Betätigungsstößel der Vorsteuerstufe aus, um den genannten Kennlinienverlauf zu bewirken.

Besonders bevorzugt wird die Betätigungseinrichtung durch eine bestrombare Spuleneinrichtung gebildet, deren Magnetanker eine Druckkraft auf den Betätigungsstößel der Vorsteuerstufe aufbringt, so dass mit zunehmendem Magnetstrom der Druck an dem Druckquellenanschluss des Ventils sinkt, unabhängig vom Volumenstrom.

Die druckwirksamen Flächen der erfindungsgemäßen Flächenübersetzungseinrichtung sind in einem besonders bevorzugten Ausführungsbeispiel des Ventils durch Durchmesserstufen an dem Betätigungsstößel der Vorsteuerstufe gebildet, die mit axialem Abstand an dem Betätigungsstößel angeordnet, zusammen mit Begrenzungwänden einer Führung für den Betätigungsstößel jeweils einen Ventilsitz bilden. Dadurch ergibt sich eine besonders einfache konstruktive Lösung, um die erfindungsgemäße Fail-Safe-Funktion in dem Ventil zu integrieren. Es werden keine zusätzlichen Bauteile an dem erfindungsgemäßen Ventil zur Ermöglichung der Fail-Safe-Funktion benötigt, sondern vorhandene Bauteile werden zur Verwirklichung der dahingehenden Funktion eingesetzt. So ergibt sich eine besonders kostengünstige, einfach und schnell produzierbare Bauweise des erfindungsgemäßen Ventils.

Vorteilhaft bildet die erste, größere druckwirksame Fläche der Flächenübersetzungseinrichtung mit der Führung des Betätigungsstößels einen kegelförmigen Ventilsitz aus. Das Vorsteuerdruckbegrenzungsventil kann dabei auch als Schieber ausgeführt werden. Der Ventilsitz ermöglicht bei betätigter Betätigungseinrichtung einen Medienfluss von der, zu der Vorsteuerstufe gehörigen Flächenübersetzungseinrichtung zu einem Tankanschluss des Ventils.

Vorteilhaft ist die erste, größere druckwirksame Fläche an einem freien, von der Betätigungseinrichtung abgewandten Ende des Betätigungsstößels angeordnet. Die Rückstelleinrichtung ist in einem besonders bevorzugten Ausführungsbeispiel des Ventils als Kraftspeicher, vorzugsweise als Schraubendruckfeder gebildet, die sich an dem freien Ende des Betätigungsstößels und an einer Aufnahme in der Führung für den Betätigungsstößel abstützt. Dabei können sich die Führung und die Rückstelleinrichtung auch im Axialbereich des Ventilelements der Hauptsteuerstufe befinden.

Es kann auch vorteilhaft sein, die Rückstelleinrichtung als Kraftspeicher und vorzugsweise als Schraubendruckfeder zu bilden, und zwischen der ersten größeren und der zweiten kleineren druckwirksamen Fläche der Flächenübersetzungseinrichtung anzuordnen, wobei sich die Schraubendruckfeder an einer Aufnahme der Führung des Betätigungsstößels und an der zweiten, kleineren druckwirksamen Fläche zumindest mittelbar abstützen kann. Diese Ausgestaltungsform des erfindungsgemäßen Ventils hat insbesondere den Vorteil, dass dessen axiale Länge verringert ist und das Ventil eine sehr kompakte Bauform aufweist.

Das erfindungsgemäße Ventil kann eine Druckbegrenzungsfunktion oder eine Druckregelfunktion ausüben und ist somit als Druckbegrenzungsventil oder als Druckregelventil besonders bevorzugt ausgebildet.

Nachstehend ist die Erfindung anhand der Zeichnung im Einzelnen erläutert. Es zeigen in schematischer und nicht maßstäblicher Darstellung:

Fig. 1 in der Art eines Längsschnitts eine erste Ausführungsform des erfindungsgemäßen Ventils;

Fig. 2 eine vergrößerte Darstellung des Details I in Fig. 1;

Fig. 3, 4 jeweils in vergrößerter Darstellung in der Art eines mit III bzw. V bezeichneten Rahmenausschnittes andere Ventillösungen, die als Alternative die untere Bildfläche der Ventilkonstruktion nach der Fig. 1 ersetzen, wobei die Fig. 3 eine Ausgestaltung als Druckbegrenzungsventil und die Fig. 4 eine Ausgestaltung als Druckregelventil betrifft; und

Fig. 5 ein beispielhafter Kennlinienverlauf mit dem an dem Druckquellenanschluss des jeweiligen Ventils herrschenden Mediendruck aufgetragen über dem Steuerstrom für den Betätigungsmagneten des Ventils.

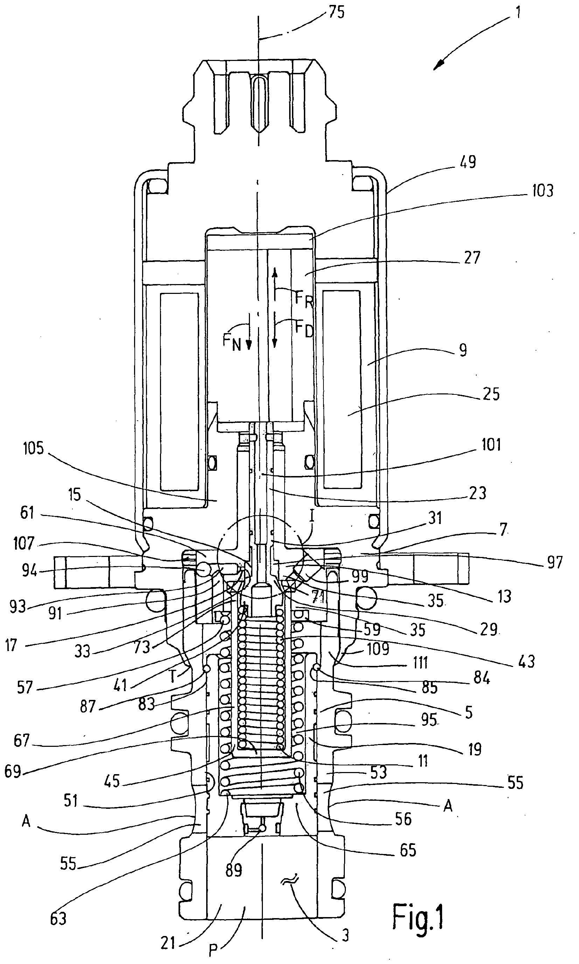

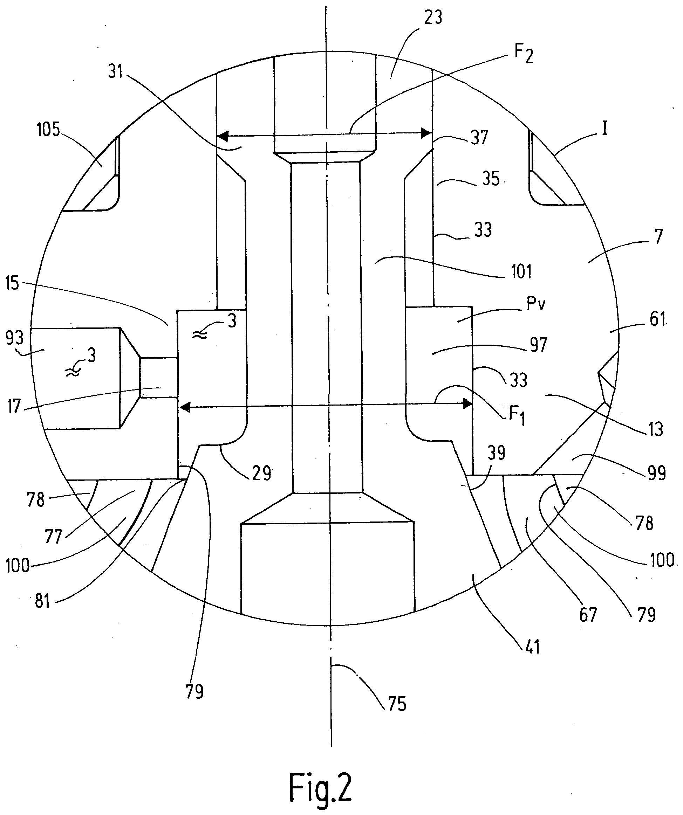

In der Fig. 1 ist in einem schematischen, nicht maßstäblichen Längsschnitt ein als Ganzes mit 1 bezeichnetes Ventil zum Ansteuern eines Mediendruckes p eines, das Ventil 1 durchströmenden Mediums 3 gezeigt. Das Ventil 1 weist eine Hauptsteuerstufe 5 und eine, die Hauptsteuerstufe 5 ansteuernde Vorsteuerstufe 7 auf. Die Vorsteuerstufe 7 ist mittels einer bestrombaren Betätigungseinrichtung 9 entgegen der Wirkung einer Rückstelleinrichtung 11 angesteuert und weist weiter eine Druckentlastungsstufe 13 auf. Wie die Fig. 2 vergrößert in einem Detail I in Fig. 1 zeigt, ist die Druckentlastungsstufe 13 in Form einer Flächenübersetzungseinrichtung 15 gebildet.

Die Flächenübersetzungseinrichtung 15 weist eine erste, größere druckwirksame Fläche $F_1$ und eine, dieser gegenüber zweite, kleinere druckwirksame Fläche $F_2$ auf. Die druckwirksamen Flächen $F_1$, $F_2$ bilden miteinander eine Flächendifferenz $F_1 - F_2$ aus. Auf die druckwirksamen Flächen $F_1$, $F_2$ wirkt ein von der Vorsteuerstufe 7 beeinflusster Mediendruck pvein. Es kann auch vorteilhaft sein, die Flächenübersetzungseinrichtung 15 mit einer Blende, insbesondere in Form einer Dämpfungsblende 17 zu versehen, die in Richtung des Fluidstromes der eigentlichen Übersetzungseinrichtung 15 vorgeschaltet ist.

Durch die Wirkung der Flächenübersetzungseinrichtung 15 wird insbesondere bei nicht betätigter Betätigungseinrichtung 9 ein Ventilelement 19 der Hauptsteuerstufe 5 in einer von zumindest der Flächendifferenz $F_1 - F_2$ der druckwirksamen Flächen $F_1$, $F_2$ und/oder durch die Wirkung zumindest der einen Blende 17 und des Mediendruckes p an einem Druckquellenanschluss 21 des Ventils 1 bestimmten Position gehalten. Der Mediendruck p an dem Druckquellenanschluss 21 des Ventils 1 wird hierbei von der Kraft $F_N$ der Betätigungseinrichtung 9, der Kraft $F_R$ der Rückstelleinrichtung 11 und von der Flächendifferenz $F_1 - F_2$ der druckwirksamen Flächen $F_1$, $F_2$ gemäß der Formel

$$p_{MAX} = \frac{(F_R - F_N)}{F_1 - F_2} \quad , \text{ wobei } F_N = 0$$

bestimmt.

Bei nicht betätigtem Magnet nimmt das Ventilelement beim Erreichen des Maximaldruckes automatisch die Drosselstellung ein, die benötigt wird, um bei dem gegebenen Volumenstrom den Maximaldruck zu erreichen.

Zur Betätigung der Vorsteuerstufe 7 bringt die Betätigungseinrichtung 9 die Kraft $F_N$ in Form einer Druckkraft $F_D$ auf einen Betätigungsstößel 23 der Vorsteuerstufe 7 auf, wobei vorzugsweise $F_N = F_D$ ist. Die Betätigungseinrichtung 9 weist eine bestrombare Spuleneinrichtung 25 auf, bei deren Bestromung ein Magnetanker 27 die Druckkraft $F_D$ auf den Betätigungsstößel 23 der Vorsteuerstufe 7 aufbringt. Mit zunehmendem Volumenstrom des Mediums 3, das durch das Ventil 1 geführt ist, sinkt der Mediendruck p an dem Druckquellenanschluss 21. Die druckwirksamen Flächen $F_1$, $F_2$ sind durch Durchmesserstufen 29, 31 an dem Betätigungsstößel 23 der Vorsteuerstufe 7 gebildet und mit axialem Abstand an dem Betätigungsstößel 23 angeordnet. Die Wandteile des Betätigungsstößels 23, die die druckwirksamen Flächen $F_1$, $F_2$ begrenzen, bilden zusammen mit den Begrenzungswänden 33 einer gehäuseseitigen Führung 35 für den Betätigungsstößel 23 einen Ventilsitz 39 bzw. eine Ventildichtfläche 37 aus.

Die erste, größere druckwirksame Fläche $F_1$ der Flächenübersetzungseinrichtung 15 bildet mit der Führung 35 des Betätigungsstößels 23 den kegelförmigen Ventilsitz 39 aus. Bei einer Betätigung der Betätigungseinrichtung 9 ermöglicht der Ventilsitz 39 einen Medienfluss von der, zu der Vorsteuerstufe 7 gehörigen Flächenübersetzungseinrichtung 15 zu einem Tankanschluss T, der über eine nicht näher dargestellte Verbindungsleitung aus dem Gehäuse an der Stelle T herausgeführt ist. Es findet dann insoweit ein Druckabfall auf der dem Druckquellenanschluss 21 rückwärtigen Seite des Ventilelements 19 statt. Die erste, größere druckwirksame Fläche $F_1$ ist an einem freien, von der Betätigungseinrichtung 9 abgewandten Endbereich 41 des Betätigungsstößels 23 angeordnet. Die Rückstelleinrichtung 11 ist als Kraftspeicher und vorzugsweise als Schraubendruckfeder 43 ausgebildet. Die Schraubendruckfeder 43 stützt sich an dem einen freien stirnseitigen Ende des Betätigungsstößels 23 und an einer Aufnahme 45 in einer nachstehend noch näher beschriebenen Hülse 67 ab. Die Rückstelleinrichtung 11 oder Schraubendruckfeder 43 wirkt mit einer Kraft $F_R$ in umgekehrter Wirkrichtung zu der Druckkraft $F_D$ des Magnetankers 27 der Betätigungseinrichtung 9 und der Flächenübersetzungseinrichtung 15 auf den Betätigungsstößel 23 ein.

Das Ventil 1 kann als Druckregelventil ausgebildet sein, ist aber in dem gezeigten Ausführungsbeispiel als Druckbegrenzungsventil 49 konzipiert. Das Druckbegrenzungsventil 49 ist in der Art eines Wege-Schieberventils ausgebildet, oder als Vorsteuerung für Wegeventile, auch für schnellschaltende Wegeventile für die Digitalhydraulik. Das in der Art eines zylindrischen, hohlen Kolbens gebildete Ventilelement 19 ist axial verfahrbar in einer Längsführung 51 eines zylindrischen Ventilgehäuses 53 in abgedichteter Weise geführt. Das Ventilelement 19 steuert einen Medienfluss zwischen dem axialen, zentralen Druckquellenanschluss 21 in dem Ventilgehäuse 53 und einem, durch radiale Öffnungen 55 in dem Ventilgehäuse 53 gebildeten Tankanschluss T. Von den radialen Öffnungen 55 sind zwei diametral zu der Längsachse 75 des Ventils 1 angeordnet gezeigt. Das Ventilelement 19 ist in einer, die radialen Öffnungen 55 sperrenden Position durch eine stark dimensionierte Schraubendruckfeder 56 gehalten. Die Schraubendruckfeder 56 stützt sich mit ihrem einen freien Ende 57, das dem Betätigungsstößel 23 zugewandt ist, in einer ringförmigen Aufnahme 59 in einem Vorsteuerstufen-Gehäuseteil 61 ab. Mit ihrem anderen freien Ende 63 liegt die Schraubendruckfeder 56 an einem kreisscheibenartigen Boden 65 des Ventilelements 19 an. Die Schraubendruckfeder 56 ist in ihrer nicht betätigten Ausgangsstellung radial in dem Ventilelement 19 über etwa 4/5 ihrer axialen Gesamt-Erstreckung zentriert. Das Ventilelement 19 weist dazu die Gestalt eines lang dimensionierten Kolbens auf. Die Schraubendruckfeder 56 dient als Stellelement für das Ventilelement 19 und zur Herstellung einer, ein Kräftegleichgewicht zwischen Kraft auf die Stirnfläche des Kolbens, welche durch eine Druckdifferenz über Vorsteuerölstrom der Blende 89 erzeugt wird und der Stellkraft der Schraubendruckfeder 56 widerspiegelnden Position des Ventilelements 19 in dem Ventilgehäuse 53.

In dem in Fig. 1 gezeigten Ausführungsbeispiel des Ventils 1 ist das Ventilelement 19 in einer von der Stellkraft der Schraubendruckfeder 56 bewirkten Endposition. In dieser Endposition ist eine medienführende Verbindung zwischen dem Druckquellenanschluss 21 und dem Tankanschluss T gesperrt. Die Hülse 67 ist einstückig gebildet und in dem Vorsteuerstufen-Gehäuseteil 61 mit Hilfe einer Pressverbindung festgelegt. Hierzu weist die Hülse 67 einen Axialabschnitt 71 ihrer Wand 73 auf, der mit einem endseitig der Hülse 67 angeordneten, mit etwa 30° radial zu der Längsachse 75 des Ventils 1 winklig verlaufenden Randabschnitt 77 versehen ist. Mit seinen parallel zu der Längsachse 75 verlaufenden Wandteilen ist die Hülse 67 mit Wandabschnitten 78 einer zentralen Bohrung 79 in dem Vorsteuerstufen-Gehäuseteil 61 mit Hilfe einer Presspassung verbunden. Die Hülse 67 ist mediendicht gebildet und dient auch als Zentrierhilfe für die Schraubendruckfeder 43.

Das Ventilelement 19 weist ferner einen Anschlag 83 an seinem, dem Boden 65 gegenüberliegenden axialen Ende auf. Der Anschlag 83 wird durch einen Sprengring 84, welcher in eine Umfangsnut 85 des Ventilelements 19 gelegt ist, gebildet. Der Sprengring 84 ragt mit etwa der Hälfte seines Querschnitts umfangsseitig über den Außenumfang des Ventilelements 19 und ist in Anlage mit einer ringförmigen Anschlagfläche 87 am Innenumfang der Längsführung 51. Die Anschlagfläche 87 weist denselben Radius, wie derjenige des Sprengrings auf und ist durch eine Durchmesserverkleinerung des Innendurchmessers des kreisrunden Querschnitts der Längsführung 51 gebildet. Im Axialbereich der Längsführung 51, in der der Druckquellenanschluss 21, die Öffnungen 55 und im Wesentlichen das Ventilelement 19 sich befinden, ist der Innendurchmesser geringer als im Axialbereich der Längsführung 51 zwischen der Anschlagfläche 87 und dem Vorsteuerstufen-Gehäuseteil 61.

In dem Boden 65 des Ventilelements 19 ist zentral eine Blende 89 angeordnet, über die der an dem Druckquellenanschluss 21 herrschende Mediendruck p auf die dem Druckquellenanschluss 21 abgewandten Seite des Bodens 65 weiter geleitet ist. Über einen parallel und mit radialem Abstand zu der Längsachse 75 geführten Stichkanal 91 in dem Vorsteuerstufen-Gehäuseteil 61 und einem Querkanal 93, in den der Stichkanal 91 mündet, ist ein Medienraum 95 angeordnet zwischen dem Boden 65 des Ventilelements 19 und dem Vorsteuerstufen-Gehäuseteil 61 medienführend mit einem weiteren Medienraum 97 der Flächenübersetzungseinrichtung 15 verbunden. Der Medienraum 97 wird von der Begrenzungswand 33 und den druckwirksamen Flächen $F_1$, $F_2$ gebildet durch den Betätigungsstößel 23 begrenzt. In dem Querkanal 93 ist die Blende 17 am Übergang von dem Querkanal 93 zu dem Medienraum 97 zentral angeordnet. Der Querkanal 93 mündet in jedweder Position des Betätigungsstößels 23 in den Medienraum 97 und ist an seinem, dem Ventilgehäuse 53 zugeordneten Ende mit einem Verschlusskörper 94 mediendicht verschlossen. In dem Medienraum 97 herrscht der Mediendruck pv der Vorsteuerstufe 7. Bezogen auf die Längsachse 75 des Ventils 1 ist diametral zu der Blende 17 der Abströmkanal 99 im Vorsteuerstufen-Gehäuseteil 61 angeordnet. Der Abströmkanal 99 ist in der Art einer Stufenbohrung mit sich zu dem Wandabschnitt 77 der Hülse 67 verringerndem Durchmesser gebildet. Der Abströmkanal 99 mündet über am freien Ende der Hülse 67 angeordnete Querkanäle 100 in den weiteren Medienraum 97 ein und ein Medienfluss in dem Abströmkanal 99 wird in Abhängigkeit von der Position des Endbereiches 41 des Betätigungsstößels 23 zu der Innenkante 81 gesteuert. In dem gezeigten Ausführungsbeispiel in Fig. 1, 2 ist der Abströmkanal 99 demgemäß mit Medienfluss versehen. Der Abströmkanal 99 ist weiter medienführend mit dem Leckölanschluss L verbunden.

Bei einer Betätigung des Betätigungsstößels 23 wird der Ventilsitz 39 geöffnet und Medium 3 kann von den Medienräumen 95 und 97 zu dem Abströmkanal 99

und dem Lecköianschluss L strömen. Es ergibt sich dadurch wiederum ein Druckabfall in den Medienräumen 95, 97, wodurch das Ventilelement 19 mit einer geringeren, dem Mediendruck p am Druckquellenanschluss 21 entgegengerichteter Kraft beaufschlagt ist. Medium 3 kann somit auch von dem Druckquellenanschluss 21 zu dem Tankanschluss strömen, da sich das Ventilelement 19 in Betrachtungsrichtung der Fig. 1 nach oben bewegt. Durch den Mediendruck pv der Vorsteuerstufe 7, insbesondere in dem Medienraum 95, ergibt sich aufgrund der Anordnung der druckwirksamen Flächen $F_1$, $F_2$ an dem Betätigungsstößel 23 eine Stellkraft der Flächenübersetzungseinrichtung 15, die gleichgerichtet ist, wie die Druckkraft $F_D$ der bestrombaren Spuleneinrichtung 25.

Der Betätigungsstößel 23 weist einen zentral verlaufenden Medienkanal 101 auf, der vom Inneren der Hülse 67 zu einem Ankerraum 103 für den Magnetanker 27 führt. Bei einer Betätigung des Betätigungsstößels 23 durch den Magnetanker 27 ist somit der Ankerraum 103 insofern druckausgeglichen, als dass in diesem der Druck des Lecköianschlusses der Vorsteuerstufe 7 herrscht.

Das Ventilgehäuse 53 ist über eine Steckverbindung in einem Polrohrsockel 105 nicht dichtend festgelegt. Das Vorsteuerstufen-Gehäuseteil 61 durchragt mit seinem, die Führung 35 für den Betätigungsstößel 23 bildenden Abschnitt den Polrohrsockel 105. Der Polrohrsockel 105 ist mit einem, dem Ventilgehäuse 53 zugewandten Umfangsrand 109 versehen. Der Umfangsrand 109 weist eine wesentlich geringere Wandstärke als die weiteren Wandabschnitte des Polrohrsockels 105 auf und ist im Bereich einer konischen Einschnürung 111 des Außendurchmessers des Ventilgehäuses 53 an dieses gebördelt.

Das in Fig. 1 gezeigte Ventil 1 baut insbesondere in axialer Richtung sehr kompakt, da die die Rückstelleinrichtung 11 bildende Schraubendruckfeder 43 nahezu vollständig im Axialbereich der Schraubendruckfeder 56 koaxial angeordnet ist. Das Ventil 1 weist wenige Bauteile auf, da in nahezu jedem Bauteil mehrere Funktionen verwirklicht sind.

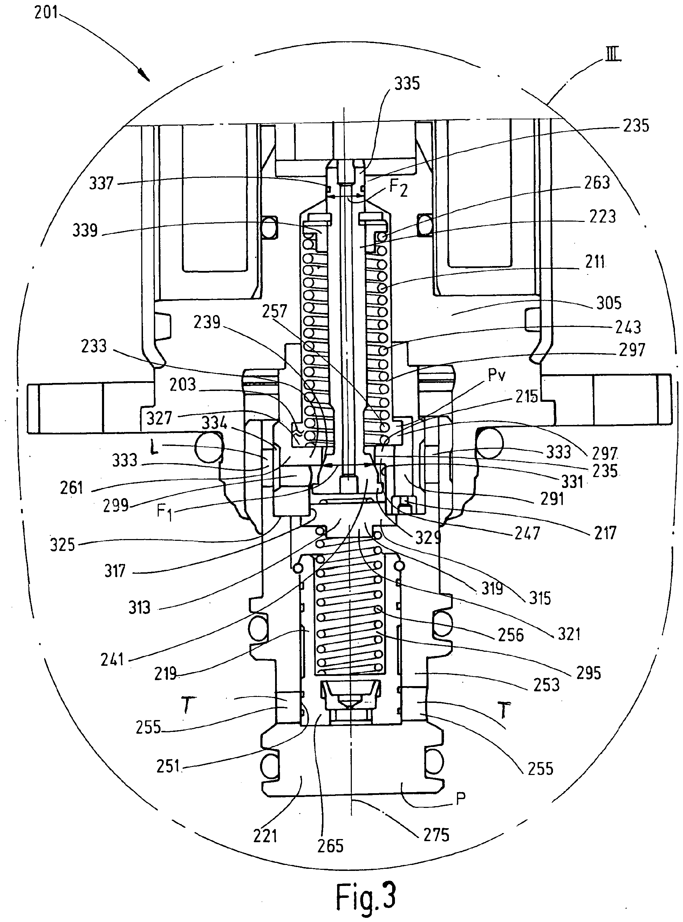

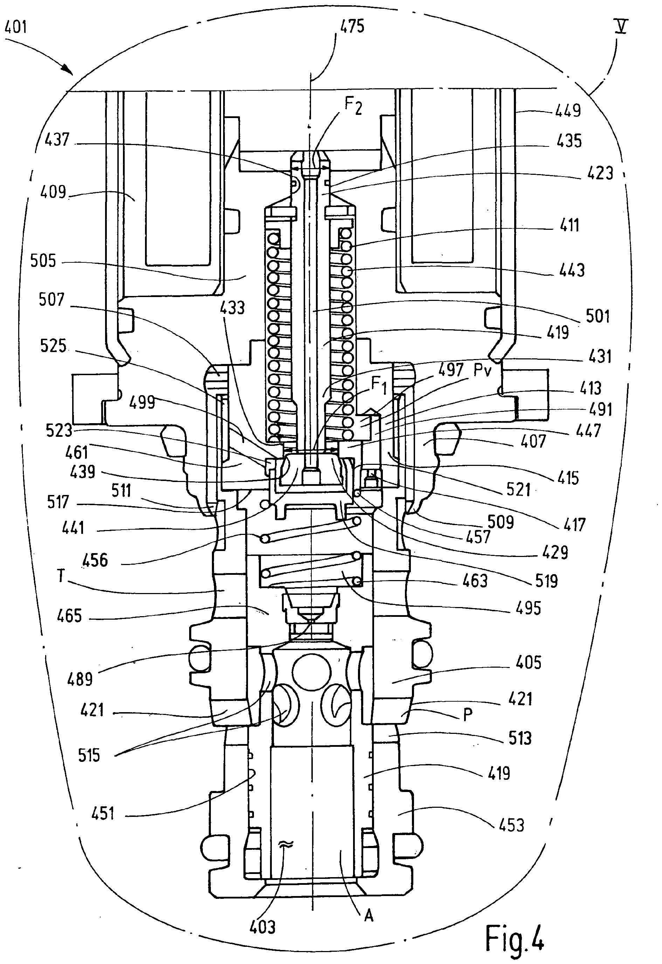

Die in den Fig. 3 und 4 im jeweiligen Detail III bzw. V gezeigten Ventile sind als Druckbegrenzungsventil (Fig. 3) und als Druckregelventil (Fig. 4) ausgebildet und unterscheiden sich von den in der Fig. 1 und 2 gezeigten Ausführungsform vorrangig durch die geänderte Zuordnung der Bauteile. Für gleiche Bauteile gelten in Fig. 3 um jeweils 200 erhöhte Bezugszeichen wie in Fig. 1 und 2 erwähnt. Für gleiche Bauteile gelten in Fig. 4 um jeweils 400 erhöhte Bezugszeichen wie in Fig. 1 und 2 erwähnt. Die insoweit zu den Fig. 1 und 2 getroffenen Ausführungen gelten auch für die nachfolgenden Ausführungsbeispiele entsprechend.

Das in den Fig. 3 teilweise gezeigte Ventil 201 weist ein Ventilgehäuse 253 auf, das einen axialen, zentralen Druckquellenanschluss 221 an seinem axialen, freien Ende aufweist. Ebenso, wie bei dem Ventil 1 in Fig. 1 gezeigt, sind radiale Öffnungen 255 in dem zylindrischen Ventilgehäuse 253 vorgesehen. Die Öffnungen 255 bilden den Tankanschluss T für einen nicht gezeigten hydraulischen Verbraucher aus. Ein zylindrisches Ventilelement 219 ist in einer zylindrischen Längsführung 251 axial verfahrbar angeordnet. Das Ventilelement 219 ist in einer axialen Endposition, in der eine medienführende Verbindung von dem Druckquellenanschluss 221 zu dem Nutzanschluss A gesperrt ist, gezeigt. Die, das Ventilelement 219 mit einer Federkraft beaufschlagende Schraubendruckfeder 256 stützt sich an dem Boden 265 des Ventilelements 219 und an einem Zwischenstück 313 ab.

Das in der Art einer Scheibe gebildete Zwischenstück 313 liegt mit Hilfe einer Durchmesserstufe 315 in einer zentralen, kreisförmigen Öffnung 317 in dem Vorsteuerstufen-Gehäuseteil 261 an. Mit einem, durch eine weitere Durchmesserstufe 319 gebildeten Zapfen 321 greift das Zwischenstück 313 in die Schraubendruckfeder 256 axial ein und zentriert diese endseitig.

In Betrachtungsrichtung der Fig. 3 ist in dem Vorsteuerstufen-Gehäuseteil 261 mit radialem Abstand zu der Längsachse 275 rechts der Stichkanal 291 parallel zu der Längsachse 275 geführt. Der Stichkanal 291 ist in der Art einer Sacklochbohrung im Vorsteuerstufen-Gehäuseteils 261 geführt und mündet endseitig in eine Umfangsnut 327 im Inneren des Vorsteuerstufen-Gehäuseteils 261 in den Medienraum 297. Mit seinem freien Ende mündet der Stichkanal 291 in die Blende 217 aus, die an der Stirnwand 325 des Vorsteuerstufen-Gehäuseteils 261 in den Medienraum 295 ausmündet. Die Blende 217 ist also in dem Stichkanal 291 an die Stirnseite 325 angrenzend angeordnet. Die größere druckwirksame Fläche $F_1$ der Flächenübersetzungseinrichtung 215 ist durch die lichte Querschnittsfläche einer, an die Umfangsnut 327 angrenzende, die Führung 235 des Betätigungsstößels 223 an seinem Endbereich 241 übernehmende Bohrung 331 in dem Vorsteuerstufen-Gehäuseteil 261 definiert. Der konusartig sich zu der Bohrung 331 hin verjüngende Endbereich 241 liegt an der Begrenzungswand 233 der Bohrung 331 dichtend an. An seinem, dem Medienraum 295 zugewandten Ende weist der Betätigungsstößel 223 einen bundartigen, radial auskragenden Umfangsrand 329 auf. Der Umfangsrand 329 dient in geöffnetem Zustand des Ventilsitzes 239 zur Umlenkung von aus dem Medienraum 297 fließenden Mediums 203 zu dem Lecköianschluss L. Der Abströmkanal 299 ist als radial mit etwa 90° zu der Längsachse 275 geführte Bohrung 331 in dem Vorsteuerstufen-Gehäuseteil 261 ausgeführt. Der Abströmkanal 299 mündet in den Lecköianschluss L, der durch eine an die Bohrung 331 angrenzende Öffnung 333 mit Ringkanal 334 in dem Ventilgehäuse 253 angeordnet ist.

An seinem, dem Endbereich 241 gegenüberliegenden Ende 335 ist der Betätigungsstößel 223 in einer zu der Führung 235 gehörigen Öffnung 337 in dem Polrohrsockel 305 in abgedichteter Weise, gleitend geführt. Die Querschnittsfläche des Endes 335 definiert die zweite, kleinere druckwirksame Fläche $F_2$. Die, den Ventilsitz

239 schließende Schraubendruckfeder 243, die die Rückstelleinrichtung 211 bildet, ist in dem Medienraum 297 angeordnet. Ihr eines Ende 257 stützt sich an einer Aufnahme 247 der Führung 235 des Betätigungsstößels 223 ab. Das andere Ende 263 der Schraubendruckfeder 243 ist mittels einer Zentrierhülse 339, die um den Betätigungsstößel 223 gelegt ist, und einem Formschlusselement zwischen dem Betätigungsstößel 223 und der Zentrierhülse 339 an dem Betätigungsstößel 223 formschlüssig lösbar festgelegt. Die, die Flächenübersetzungseinrichtung 215 teilweise definierenden Begrenzungswände 233 der Führung 235 sind durch Teile des Polrohrsockels 305 und Teile des Vorsteuerstufen-Gehäuseteils 261 gebildet.

Gemäß dem Detail V in Fig. 4 ist ein weiteres Ausführungsbeispiel eines Ventils 401, das als Druckregelventil 449 gebildet ist, gezeigt. Der Druckquellenanschluss 421 ist durch radial durch Wandabschnitte des Ventilgehäuses 453 geführte Bohrungen 513 gebildet. Es sind von einer Mehrzahl der Bohrungen 513 lediglich zwei diametral gegenüberliegende gezeigt. Das Medium 403 kann durch die Bohrungen 513 über radial durch das Ventilelement 419 geführte Ventilelementöffnungen 515 in das Innere des hohlzylindrisch gebildeten Ventilelements 419 gelangen. Die Ventilelementöffnungen 515 sind in zwei Reihen axial und radial versetzt zueinander angeordnet. Es sind eine Ventilelementöffnung 515 einer Reihe und zwei Ventilelementöffnungen 515 einer weiteren Reihe gezeigt. Der Nutzanschluss A ist zentral, axial an dem in Betrachtungsrichtung der Fig. 4 unteren Ende des Ventilgehäuses 453 angeordnet. Der Boden 465 des Ventilelements 419 ist an dem, dem Vorsteuerstufen-Gehäuseteil 461 zugewandten Ende des Ventilelements 419 angeordnet. In dem Kolben 465 ist wiederum die Blende 489 angeordnet. In Abhängigkeit von der Position des Ventilelements 419 in der Längsführung 451 kann Medium 403 vom Pumpenanschluss P zu dem Nutzanschluss A und auch vom Nutzanschluss zu dem durch radiale Öffnungen in dem Ventilgehäuse 453 gebildeten Tankanschluss T strömen. Der Mediendruck p an dem Verbraucher A, bei dem Druckregler nach der Fig. 4, ist ebenso von der Kraft ($F_N$) der Betätigungseinrichtung (9), der Kraft ($F_R$) der Rückstelleinrichtung (11) und von der Flächendifferenz ($F_1 - F_2$) der druckwirksamen Flächen ($F_1$, $F_2$) gemäß der Formel

$$P = \frac{\left(F_R - F_N\right)}{F_1 - F_2}$$

bestimmt und sinkt mit zunehmendem Magnetstrom durch das Betätigungselement (9).

Im Gegensatz zu dem in der Fig. 3 gezeigten Ausführungsbeispiel stützt sich die das Ventilelement 419 mit einer Stellkraft im Sinne einer geschlossenen oder weitestmöglich geschlossenen medienführenden Verbindung zwischen dem Druckquellenanschluss 421 und dem Nutzanschluss A beaufschlagende Schraubendruckfeder 456 mit ihrem einen Ende 457 direkt an der, dem Medienraum 495 zugewandten Stirnseite 517 des Vorsteuerstufen-Gehäuseteils 461 ab und mit ihrem anderen Ende an dem Boden 465 des Ventilelements 419 ab. Ein Verschlusselement 519 ist in das Vorsteuerstufen-Gehäuseteil 461 von dessen Stirnseite 517 in eine, den Endbereich 441 des Betätigungsstößels 423 aufnehmenden Öffnung 521 dichtend eingepresst. Das Verschlusselement 519 dient auch als Zentrierhilfe für die Schraubendruckfeder 456. Der Abströmkanal 499 ist von einer Abströmkammer 523 in Betrachtungsrichtung der Fig. 4 schräg nach oben durch das Vorsteuerstufen-Gehäuseteil 461 geführt und mündet in einen Ringkanal 525. Der Ringkanal 525 ist radial zwischen dem Vorsteuerstufen-Gehäuseteil 461 und dem Ventilgehäuse 453 angeordnet und mündet - ist als Axialnut gezeigt - wiederum in den Tankanschluss T. Bei nicht betätigter Betätigungseinrichtung 409 nimmt das Ventilelement 419 in dem in der Fig. 4 gezeigten Ausführungsbeispiel eine Position ein, in der der Arbeitsdruck an A den durch die Feder 443 definierten Maximaldruck einnimmt.

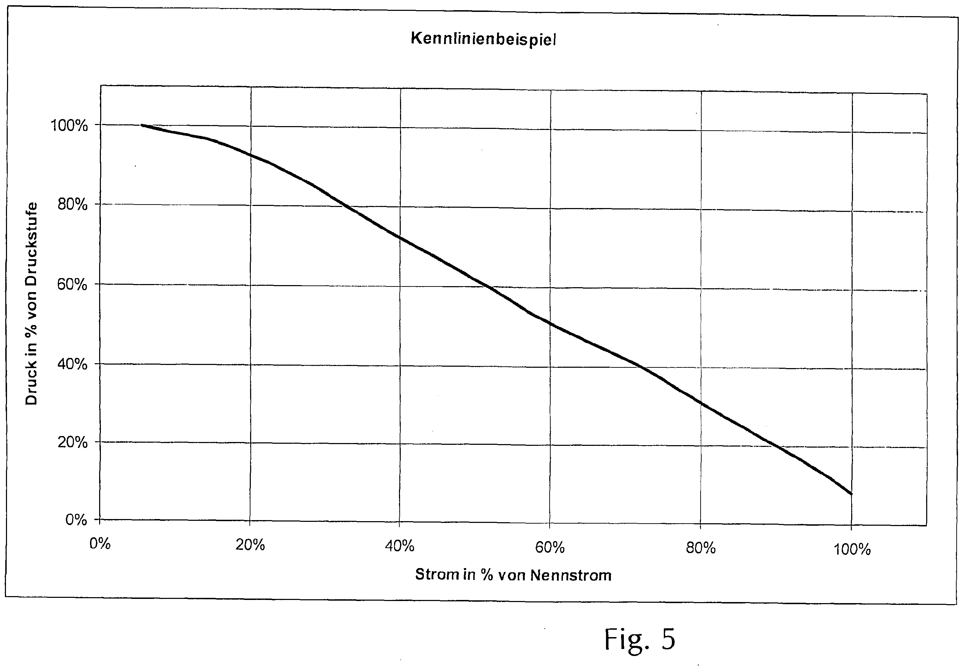

In Fig. 5 ist beispielhaft ein Kennlinienverlauf 120 in der Art einer Auftragung des Mediendruckes p an dem Druckquellenanschluss 21, insbesondere des Ventils 1 nach der Fig. 1 über den Betätigungsstrom I. Bei Betätigung der Spuleneinrichtung 25 reduziert sich stetig der Druck an Verbraucher A. Es fließt Medium von A nach T. Der Mediendruck p an dem Druckquellenanschluss 21 sinkt. Die Spuleneinrichtung 25 ist in der Art eines "drückenden Elektromagneten" gebildet. Wie aus Fig. 5 zu entnehmen ist, ergeben sich bei dem erfindungsgemäßen Ventil 1 ähnliche Kennlinien, wie dies bisher nur aus dem Stand der Technik bei der Anwendung von sog. "ziehenden Magneten" möglich war, die grundsätzlich mehr Bauteile und mithin mehr Bauraum benötigen.

**Patentansprüche**

1. Ventil, insbesondere Druckregelventil oder Druckbegrenzungsventil zum Ansteuern eines Mediendruckes eines, das Ventil (1) durchströmenden Mediums (3), mit einer Hauptsteuerstufe (5) und einer die Hauptsteuerstufe (5) ansteuernden Vorsteuerstufe (7), die mittels einer bestrombaren Betätigungseinrichtung (9) entgegen der Wirkung einer Rückstelleinrichtung (11) angesteuert ist und die eine Druckentlastungsstufe (13) des Ventils (1) aufweist, **dadurch gekennzeichnet, dass** die Druckentlastungsstufe (13) eine Flächenübersetzungseinrichtung (15) aufweist und dass die Flächenübersetzungseinrichtung (15) eine erste, größere druckwirksame Fläche ($F_1$) und eine demgegenüber zweite, kleinere druckwirksame Fläche ($F_2$) aufweist und dass auf diese eine Flächendifferenz ($F_1 - F_2$) bildenden druckwirksamen Flächen ($F_1$, $F_2$) ein von

der Vorsteuerstufe (7) beeinflusster Mediendruck (pv) wirkt und/oder dass die Flächenübersetzungseinrichtung (15) durch zumindest eine Blende (17) gebildet ist.

2. Ventil nach Anspruch 1, **dadurch gekennzeichnet, dass** durch die Wirkung der Flächenübersetzungseinrichtung (15) bei nicht betätigter Betätigungseinrichtung (9) ein Ventilelement (19) der Hauptsteuerstufe (5) in einer von zumindest der Flächendifferenz $(F_1 - F_2)$ der druckwirksamen Flächen $(F_1, F_2)$ und/oder durch die Wirkung zumindest der einen Blende (17) und einem Mediendruck (p) an einem Druckquellenanschluss (21) des Ventils (1) bestimmten, vorgebbaren Position gehalten ist.

3. Ventil nach Anspruch 1 oder 2, **dadurch gekennzeichnet, dass** der Mediendruck (p) an dem Druckquellenanschluss (21) des Ventils (1) von der Kraft $(F_N)$ der Betätigungseinrichtung (9), der Kraft $(F_R)$ der Rückstelleinrichtung (11) und von der Flächendifferenz $(F_1 - F_2)$ der druckwirksamen Flächen $(F_1, F_2)$ gemäß der Formel

$$p = \frac{(F_R - F_N)}{F_1 - F_2}$$

bestimmt ist und mit zunehmendem Volumenstrom des strömungsfähigen Mediums (3) durch das Ventil (1) sinkt.

4. Ventil nach einem der vorhergehenden Ansprüche, **dadurch gekennzeichnet, dass** die Betätigungseinrichtung (9) zur Betätigung der Vorsteuerstufe (7) eine Druckkraft (FD) auf einen Betätigungsstößel (23) der Vorsteuerstufe (7) aufbringt.

5. Ventil nach einem der vorhergehenden Ansprüche, **dadurch gekennzeichnet, dass** die Betätigungseinrichtung (9) durch eine bestrombare Spuleneinrichtung (25) gebildet ist, deren Magnetanker (27) eine Druckkraft (FD) auf den Betätigungsstößel (23) der Vorsteuerstufe (7) aufbringt, so dass mit zunehmendem Magnetstrom der Mediendruck (p) an dem Druckquellenanschluss (21) sinkt.

6. Ventil nach Anspruch 4 oder 5, **dadurch gekennzeichnet, dass** die druckwirksamen Flächen (F1, F2) durch Durchmesserstufen (29, 31) an dem Betätigungsstößel (23) der Vorsteuerstufe (7) gebildet sind, die mit axialem Abstand (a) an dem Betätigungsstößel (23) angeordnet, zusammen mit Begrenzungswänden (33) einer Führung (35) für den Betätigungsstößel (23) eine Ventildichtfläche (37) und einen Ventilsitz (39) bildend, zumindest teilweise die Flächenübersetzungseinrichtung (15) bilden.

7. Ventil nach Anspruch 6, **dadurch gekennzeichnet, dass** die erste, größere druckwirksame Fläche (F1) der Flächenübersetzungseinrichtung (15) mit der Führung (35) des Betätigungsstößels (23) einen kegelförmigen oder zylindrischen Ventilsitz (39) bildet und dass der Ventilsitz (39) bei betätigter Betätigungseinrichtung (9) einen Medienfluss von der, zu der Vorsteuerstufe (7) gehörigen Flächenübersetzungseinrichtung (15) zu einem Tankanschluss (T) des Ventils (1) ermöglicht.

8. Ventil nach Anspruch 6 oder 7, **dadurch gekennzeichnet, dass** die erste, größere druckwirksame Fläche (F1) an einem freien, von der Betätigungseinrichtung (9) abgewandten Ende (41) des Betätigungsstößels (23) angeordnet ist und dass die Rückstelleinrichtung (11) als Kraftspeicher, vorzugsweise als Schraubendruckfeder (43) gebildet, sich an dem freien Ende (41) des Betätigungsstößels (23) und an einer Aufnahme (45) in der Führung (35) abstützt.

9. Ventil nach einem der Ansprüche 6 bis 8, **dadurch gekennzeichnet, dass** die Rückstelleinrichtung (11) als Kraftspeicher und vorzugsweise als Schraubendruckfeder (43) gebildet, zwischen der ersten, größeren druckwirksamen Fläche (F1) und der zweiten, kleineren druckwirksamen Fläche (F2) angeordnet ist und sich an einer Aufnahme (47) der Führung (35) und an der zweiten, kleineren druckwirksamen Fläche (F2) zumindest mittelbar abstützt.

10. Ventil nach einem der vorhergehenden Ansprüche, **dadurch gekennzeichnet, dass** das Ventil (1) als Proportional-Druckbegrenzungsventil gebildet ist.

11. Ventil nach einem der vorhergehenden Ansprüche, **dadurch gekennzeichnet, dass** das Ventil (1) als Proportional-Druckregelventil (49) gebildet ist.

**Claims**

1. A valve, in particular a pressure regulating valve or pressure limiting valve for controlling a pressure of a medium (3) flowing through the valve (1), with a main stage (5) and a pilot stage (7) controlling the main stage (5), which pilot stage is controlled by means of an energisable actuating device (9) against the action of a return device (11) and has a pressure relief stage (13) of the valve (1), **characterised in that** the pressure relief stage (13) has a surface area modification device (15) and that the surface area modification device (15) has a first, larger pressure-active surface area $(F_1)$ and an opposing second, smaller pressure-active surface area $(F_2)$, and that a media pressure (pv) influenced by the pilot stage (7) acts on these pressure-active surface areas $(F_1, F_2)$, forming a surface area difference $(F_1 - F_2)$ and/or

that the surface area modification device (15) is formed by at least one aperture (17).

2. The valve according to claim 1, **characterised in that** a valve element (19) of the main stage (5) is held in a specific, predefinable position, which is determined by at least the surface area difference ($F_1 - F_2$) of the pressure-active surface areas ($F_1$, $F_2$) and/or by the action of at least the one aperture (17) and a media pressure (p) on a pressure source connection (21) of the valve (1) due to the action of the surface area modification device (15) when the actuating device (9) is not actuated.

3. The valve according to claim 1 or 2, **characterised in that** the media pressure (p) on the pressure source connection (21) of the valve (1) is determined by the force ($F_N$) of the actuating device (9), by the force ($F_R$) of the return device (11) and by the surface area difference ($F_1 - F_2$) of the pressure-active surface areas ($F_1$, $F_2$) according to the formula

$$p = \frac{(F_R - F_N)}{F_1 - F_2}$$

and drops with an increase in the volume flow of the medium (3) capable of flowing through the valve (1).

4. The valve according to one of the preceding claims, **characterised in that** the actuating device (9) for actuating the pilot stage (7) applies a compressive force (FD) to an actuating tappet (23) of the pilot stage (7).

5. The valve according to one of the preceding claims, **characterised in that** the actuating device (9) is formed by an energisable coil device (25), the solenoid armature (27) of which applies a compressive force (FD) to the actuating tappet (23) of the pilot stage (7), with the result that the media pressure (p) on the pressure source connection (21) drops with an increase in the solenoid current.

6. The valve according to claim 4 or 5, **characterised in that** the pressure-active surface areas (F1, F2) are formed by diameter steps (29, 31) on the actuating tappet (23) of the pilot stage (7) which, arranged at an axial spacing (a) on the actuating tappet (23), form the surface area modification device (15) at least in part together with bordering walls (33) of a guide (35) for the actuating tappet (23) forming a valve sealing surface (37) and a valve seat (39).

7. The valve according to claim 6, **characterised in that** the first, larger pressure-active surface area (F1) of the surface area modification device (15), with the guide (35) of the actuating tappet (23), forms a conical or cylindrical valve seat (39) and that, in the case of the actuated actuating device (9), the valve seat (39) makes possible a media flow from the surface area modification device (15) belonging to the pilot stage (7) to a tank connection (T) of the valve (1).

8. The valve according to claim 6 or 7, **characterised in that** the first, larger pressure-active surface area (F1) is arranged on a free end (41) of the actuating tappet (23) facing away from the actuating device (9), and that the return device (11), formed as an energy accumulator, preferably as a helical compression spring (43), is supported on the free end (41) of the actuating tappet (23) and on a receptacle (45) in the guide (35).

9. The valve according to one of claims 6 to 8, **characterised in that** the return device (11) is formed as an energy accumulator and preferably as a helical compression spring (43) arranged between the first, larger pressure-active surface area (F1) and the second, smaller pressure-active surface area (F2), and is supported at least indirectly on a receptacle (47) of the guide (35) and on the second, smaller pressure-active surface area (F2).

10. The valve according to one of the preceding claims, **characterised in that** the valve (1) is designed as a proportional pressure limiting valve.

11. The valve according to one of the preceding claims, **characterised in that** the valve (1) is designed as a proportional pressure regulating valve (49).

**Revendications**

1. Soupape, notamment soupape de régulation de la pression ou soupape de limitation de la pression, pour commander une pression d'un fluide (3) passant dans la soupape (1), comprenant un étage (5) de commande principale et un étage (7) pilote, commandant l'étage (5) de commande principale, qui est commandé au moyen d'un dispositif (9) d'actionnement, pouvant être alimenté en courant électrique, à l'encontre de l'effet d'un dispositif (11) de rappel et qui a un étage (13) de détente de la pression de la soupape (1), **caractérisée en ce que** l'étage (13) de détente de la pression a un dispositif (15) de multiplication de surface et **en ce que** le dispositif (15) de multiplication de surface a une première surface ($F_1$) plus grande, efficace en pression, et, par rapport à celle-ci, une deuxième surface ($F_2$) plus petite, efficace en pression, et **en ce qu'**à ces surfaces ($F_1$, $F_2$) efficaces en pression et formant une différence ($F_1 - F_2$) de surface, s'applique une pression (pv) influencée par l'étage (7) pilote et/ou **en ce que** le dispositif (15) de multiplication de surface est formé par au moins un diaphragme (17).

2. Soupape suivant la revendication 1, **caractérisée en ce que**, par l'effet du dispositif (15) de multiplication de surface, alors que le dispositif (9) d'actionnement n'est pas actionné, un élément (19) de soupape de l'étage (5) de commande principale est maintenu dans une position pouvant être donnée à l'avance et déterminée par au moins la différence $(F_1 - F_2)$ de surface des surfaces $(F_1, F_2)$ efficaces en pression et/ou par l'effet d'au moins le un diaphragme (17) et d'une pression (p) de fluide sur un raccord (21) de source de pression de la soupape (1).

3. Soupape suivant la revendication 1 ou 2, **caractérisée en ce que** la pression (p) de fluide sur le raccord (21) de source de pression de la soupape (1) est déterminée par la force $(F_N)$ du dispositif (9) d'actionnement, par la force $(F_R)$ du dispositif (11) de rappel et par la différence $(F_1 - F_2)$ de surface des surfaces $(F_1, F_2)$ efficaces en pression suivant la formule

$$p = \frac{(F_R - F_N)}{F_1 - F_2}$$

et diminue au fur et à mesure qu'augmente le courant en volume du fluide apte à s'écouler passant dans la soupape (1).

4. Soupape suivant l'une des revendications précédentes, **caractérisée en ce que** le dispositif (9) d'actionnement applique, pour l'actionnement de l'étage (7) pilote, une force (FD) de pression à un poussoir (23) d'actionnement de l'étage (7) pilote.

5. Soupape suivant l'une des revendications précédentes, **caractérisée en ce que** le dispositif (9) d'actionnement est formé d'un dispositif (25) à bobine pouvant être alimenté en courant électrique, dont la culasse (27) magnétique applique une force (FD) de pression au poussoir (23) d'actionnement de l'étage (7) pilote, de manière à diminuer, au fur et à mesure qu'augmente le courant dû à l'aimant, la pression (p) de fluide au raccord (21) de source de pression.

6. Soupape suivant la revendication 4 ou 5, **caractérisée en ce que** les surfaces (F1, F2) efficaces en pression sont formées par des étages (29, 31) de diamètre sur le poussoir (23) d'actionnement de l'étage (7) pilote, qui, disposés à une distance (a) axiale du poussoir (23) d'actionnement, forment, au moins en partie, le dispositif (15) de multiplication de surface, en formant, ensemble avec des parois (33) de démarcation, un guidage (35) du poussoir (23) d'actionnement, une surface (37) d'étanchéité de la soupape et un siège (39) de la soupape.

7. Soupape suivant la revendication 6, **caractérisée en ce que** la première surface (F1) plus grande, efficace en pression, du dispositif (15) de multiplication de surface, forme, avec le guidage (35) du poussoir (23) d'actionnement, un siège (39) de soupape conique ou cylindrique et **en ce que** le siège (39) de la soupape rend possible, lorsque le dispositif (9) d'actionnement est actionné, un flux du fluide du dispositif (15) de multiplication de surface, appartenant à l'étage (7) pilote, à un raccord (T) de réservoir de la soupape (1).

8. Soupape suivant la revendication 6 ou 7, **caractérisée en ce que** la première surface (F1) plus grande, efficace en pression, est montée à une extrémité (41) libre, loin du dispositif (9) d'actionnement, du poussoir (23) d'actionnement et **en ce que** le dispositif (11) de rappel, sous la forme d'un accumulateur de force, de préférence d'un ressort (43) de compression hélicoïdal, s'appuie à l'extrémité (41) libre du poussoir (23) d'actionnement et sur un logement (45) dans le guidage (35).

9. Soupape suivant l'une des revendications 6 à 8, **caractérisée en ce que** le dispositif (11) de rappel est sous la forme d'un accumulateur de force et, de préférence, sous la forme d'un ressort (43) de compression hélicoïdal, est disposé entre la première surface (F1) plus grande, efficace en pression et la deuxième surface (F2) efficace en pression plus petite et s'appuie, au moins indirectement, sur un logement (47) du guidage (35) et sur la deuxième surface (F2) efficace en pression, plus petite.

10. Soupape suivant l'une des revendications précédentes, **caractérisée en ce que** la soupape (1) est constituée sous la forme d'une soupape de limitation de la pression proportionnelle.

11. Soupape suivant l'une des revendications précédentes, **caractérisée en ce que** la soupape (1) est sous la forme d'une soupape (49) de régulation de la pression proportionnelle.

Fig.1

Fig.2

Fig.3

Fig.4

Kennlinienbeispiel

Fig. 5

EP 2 718 602 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4316599 A
- DE 102005006321 A1
- DE 102007015077 A1
- DE 4442085 A1
- EP 0030083 A2
- US 4750704 A
- DE 3042015 A1